# EUROPEAN PATENT SPECIFICATION

(11) **EP 3 135 482 B1**
(45) Date of publication and mention of the grant of the patent: **18.11.2020**
(21) Application number: 16171366.4
(22) Date of filing: 25.05.2016
(51) Int. Cl.: B32B 17/10, A45D 42/00

(54) **DOUBLE SAFETY MIRROR AND METHOD OF MANUFACTURING THEREOF**
DOPPELSICHERHEITSSPIEGEL UND HERSTELLUNGSVERFAHREN DAFÜR
MIROIR DOUBLE DE SÉCURITÉ ET PROCÉDÉ POUR SA FABRICATION

(30) Priority: 24.08.2015 IT UB20153198; 24.08.2015 CH 12142015
(43) Date of publication of application: 01.03.2017
(73) Proprietor: Galvolux SA tecnica del vetro e dello specchio, 6934 Bioggio (CH)
(72) Inventor: RIGHETTI, Eduard, 6934 Bioggio (CH); JELMINI, Paolo, 6934 Bioggio (CH); SCHILLING, Alexander, 6934 Bioggio (CH); CASTROVINCI, Andrea, 6934 Bioggio (CH); SPAGGIARI, Marco, 6934 Bioggio (CH)
(74) Representative: Fiammenghi, Alessandro

(56) References cited:
- EP-A1- 0 882 997
- GB-A- 2 097 328
- US-A- 1 885 232
- US-A- 1 934 802
- US-A- 2 062 646
- US-A- 2 468 568
- US-A1- 2007 223 096

## Description

### Field of the invention

The present invention concerns in general the glazing technology. In detail, the present invention concerns a double safety mirror. The present invention concerns furthermore a method of production of a double safety mirror.

### Background art

From a very long time, the use of safety glazing takes place in different sectors. In detail, the safety glazing are laminated or stratified glazing that do not break in a plurality of physically disjointed parts when being hit by an object. Typically, said safety glazing comprise an intermediate layer with a rigidity less than the glass one, and more in detail a plastic layer, that intervenes as a damper impeding the fragments of glass to separate.

The use of safety glazing laminated or stratified, has become over the years of fundamental and irrevocable importance, most of all in automotive sectors or in public offices.

Many of the safety glazing that use an intermediate plastic layer, use PVB (polyvinyl - buryral) material. This is the case of the glazing shown in the document US 5, 246, 764, which shows a sandwich composed by two glass plates between which there is an intermediate layer of PVB plastic material.

In the glass of the said document US 5, 246, 764, between the glass plates and the intermediate layer of PVB plastic material, the contact is not continuous. Furthermore, the applicant has observed that in the traditional process of production of a safety glazing, particular working of the glass plates allow of increasing the resistance of the sandwich so created. This is valid in particular into the technology of mirrors. In fact, the applicant has noticed that also for mirrors there is sometimes the need of avoiding that, in case of impact, the mirror breaks in a plurality of parts physically disjointed. This is for example the case for bathroom mirrors, both for private usage as for public sector.

The applicant has furthermore observed that part of the problems of robustness of known safety glazing, are furthermore due to processes of production which are not perfect in terms of future stability of the sandwich in time. Therefore, the applicant has observed that the stability over time of the features of safety glazing significantly depends of the production process thereof. A safety mirror with the features of the preamble of claim 1 is disclosed in EP0882997. The scope of the present invention is therefore to realize a safety mirror, which has enhanced features of resistance.

The scope of the present invention is furthermore directed to a method of production of a safety mirror, which allows for obtaining a stronger mirror, capable, in case of impact, of not breaking into a plurality of physically disjointed parts.

### Summary of the invention

According to the present invention is realized a safety mirror, characterized in that it comprises a sandwich in turn comprising a couple of plates of glass material planarly parallel and separated from each other by a layer of plastic buffer material realizing a breakage-preventing layer of said safety mirror. Both of the said couple of plates of glass material have a painted side which faces towards said layer of plastic buffer material; and wherein said painted side is a flamed side, and wherein said layer of plastic buffer material is a mixing-for-compression layer of gluing material in advance arranged on each of the painted sides. Advantageously, said layer of plastic buffer material comprises at least one layer of hot-melt glue (so called *hot melt*), of a thermoplastic elastomeric (TPE) type, and wherein said hot-melt glue (so called *hot melt*), of a thermoplastic elastomeric (TPE) type has at a temperature of 140°C a viscosity comprised in the interval 1000-2000 Pa^{∗}s. According to an aspect of the present invention, said glue is a glue in pellet form kept in waterproof container.

In detail said layer of plastic buffer material is realized starting from a couple of layers of gluing material being then joint together.

Each layer of gluing material has a density comprised in the interval between 100g/m² and 200g/m².

More in detail, the values of said density are valid in particular in case of use of a glue with thermoplastic elastomeric material.

Advantageously, said safety mirror has a lap-shear test resistance, on an area of gluing equivalent to 24 x 12.5 mm, higher than 0,4MPa.

Advantageously, between said painted layer and said plate of glass material is interposed a layer of reflecting material realized in silver or in aluminum. According to the present invention is furthermore realized a method of production of a safety mirror, said method comprising:
- a preventive step of production of a couple of plates of glass material, each of which has a painted side;
- a second step of application of a layer of gluing material on said painted side of each plate of the said couple of plates of glass material;
- a further step of superimposition of the said painted sides with said layer gluing material, realizing a sandwich formed by a couple of plates of glass material being planarly parallel and separated by a layer of plastic buffer material deriving from the union of said layers of gluing material previously positioned on said painted side; and
- a step of pressing of said sandwich in a direction which is orthogonal to the direction defined by said planes of the plates of glass material;
said method comprising furthermore a step of pre-heating of each of the plates of glass material being part of said couple of plates.

In a further aspect of the present invention, said method comprises a step of heating of a painted side of each of said plates by means of a naked flame, wherein said naked flame is a blue flame containing OH radicals deriving from the combustion of gases at least partially comprising methane or propane.

In a further aspect of the present invention, said plastic buffer material is realized starting from a fluid glue, and wherein said method comprises a step of deposition by means of deposition rollers of said fluid glue on said painted side of said at least one of the plates of the said couple of plates of glass material, before said step of superimposition of said painted sides.

In detail, each layer of gluing material is superimposed to a respective painted side, and therefore there is a layer of gluing material for each plate of glass material. In a further aspect of the present invention, said plastic buffer material derives from a fluid glue and said method comprises a step of extraction from waterproof containers of plurality of pellet of said glue, starting from a waterproof container, preferably in vacuum and a step of deposition of a fused portion of said pellet of said glue on said painted side by means of a step of de-humidification of the air with which said glue comes into contact before the deposition on the side of each of said plates of glass material.

In a further aspect of the present invention, said step of pre-heating comprises bringing said plates of glass material to a temperature comprised in the interval between [50-150] °C, preferably 100°C.

In a further aspect of the present invention, said step of step of deposition by means of deposition rollers of said fluid glue comprises a step of preventive heating of the said glue to a temperature comprised between [100-200]°C and a step of heating of said deposition roller up to 150°C. The presence of a heated deposition roller is important for keeping the homogeneity of temperature of the glue.

In a further aspect of the present invention, said method comprises a step of deposition of said fluid glue for an amount comprised between 100g/m² and 200g/m² on each of the painted sides. Said amount of glue shall be intended as being purely exemplary and non-limiting.

In a further aspect of the present invention, said step of superimposition of the said painted sides with said layer of gluing material takes place after an interval of time between 5s and 60s after said step of deposition of the said fluid glue.

In a further aspect of the present invention, said glue is an hot-melt type glue (so called *hot melt),* of a thermoplastic elastomeric (TPE) type.

More in detail, said glue of thermoplastic elastomeric type comprises at least one among:
- ethylene vinyl acetate (EVA)
- polyethylene (PE)
- styrene-butadiene copolymer (SBS)
- thermoplastic polyurethane (TPU)
- amorphous poly-alpha olefins (APAO)
- co-polyamide (CoPA)
- co-polyester (CoPES)
- reactive *hot melt* (RHM)

### Description of the figures

The invention will be now described with reference to the annexed figures wherein:
- Figure 1 shows a section view of the safety mirror object of the present invention;
- Figure 2 shows a synthetic diagram of the production process of the safety mirror object of the present invention;
- Figure 3 shows a flow char of the production process of the safety mirror object of the present invention.

### Detailed description of the invention.

With reference to the annexed figures, with the reference number 100 is indicated in its complex a safety mirror.

The safety mirror has been conceived for allowing that also in case of shock there are not dangerous fractures of the glass plates of which it is composed; in detail, this means that when broken, the safety mirror 100 object of the present invention breaks but the single parts of glass rest anyway jointed for a maximal part to the resting part of the structure, and do not unglue from this last.

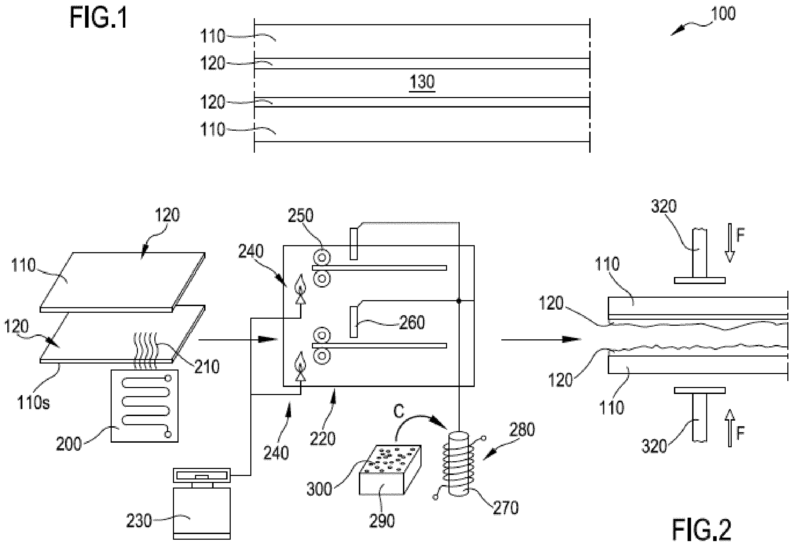

As it is shown in detail in figure 1, on the safety mirror 100 object of the present invention there are a first and a second plate of glass material 110, each one having a first and a second side; the first side of each of the two plates is directed outwards the safety mirror 100, while the second side, opposed respective to the first, is directed inwards the safety mirror 100.

The second side is painted, and therefore has a painted layer 120 superimposed to the glassy layer and of a significantly smaller thickness.

The painted layer 120 represents a layer which is necessary for protecting the thin layer of silver or aluminum, preferably but in a non-limiting extent deposited on a side of the plate of glass material by means of electrolysis, that realizes a reflective layer. If needed on the layer of silver or aluminum a copper layer protection is deposited. Interposed between the two plates of glass material 110 there is a layer 130 of plastic buffer material, a material capable of absorbing the shocks deforming significantly more than the glass, and wherein said material has features of plastic deformability and return to the original shape following of an impact. The plastic material layer, such as it will be further described in the following part of the description, is realized starting from a fluid glue and represents a layer of mixing of two layers of fluid glue that were deposited in advance on the plates of glass material 110.

It is therefore realized a safety mirror 100 composed by a sandwich that, once observed in section and proceeding axially from one side to the other has, in order: a first plate of glass material 110, a painted layer 120 superimposed to the second side of the first plate of glass material 110, the layer of buffer plastic material 130, a second painted layer 120 superimposed to the second side of the second plate of glass material 110, and the second plate of glass material. Preferably, but in a non-limiting extent, said painted layer 120 is fixed to the underlying layer in an infrared oven, that preferably but in a non-limiting extent is brought to a temperature comprised between 100°C and 200°C The safety mirror realized by means of the present invention is characterized in that it is realized through a peculiar production process suitable of increasing the robustness and security thereof in case of impact of any object against the surface.

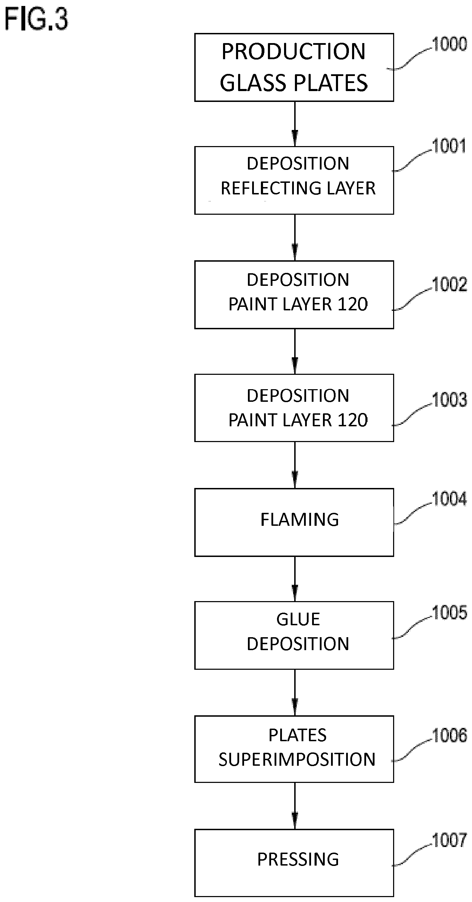

With reference to figure 3, the process of production of the safety mirror 100 object of the present invention is conveniently realized by two or more production machines for producing said safety mirror.

The process of production of the mirror starts from the production of two glassy laminates that will be cut for producing said two plates of glass material 110 (block 1000). The cutting and grinding process of the plates takes place according to known techniques.

A first phase of working comprises therefore the painting of one of the two faces of each of the two plates of glass material 110, so that to realize said painted layer 120 (block 1002) that protects the layer of reflecting material previously applied (block 1001) to the plate of glass material 110.

Subsequently, in a second and subsequent phase of working, both plates of glass material 110, in a first station of the machine for producing said safety mirror, are preheated (block 1003) by means of for example and in a non-limiting extent an electric heater 200 that heats the plates of glass material with radiation 210.

The two plates of glass material 110 come therefore in a second station of the machine for producing said safety mirror 110, being made to slide on a conveying belt or on an equivalent motion means.

In said second station 220, there is a plurality of gas supplying nozzles 240, arranged in proximity of each of the two plates of glass material.

Said nozzle 240 are fed by means or respective conduits from a gas source, for example a tank 230, preferably containing propane or methane.

The two plates of glass material 110 are subsequently flamed (block 1004) with naked flame, fed specifically by said nozzles 240, from the side where there is the painted layer 120.The applicant has observed that using a blue flame, therefore a flame with high degree of combusted oxygen and therefore an oxidizing flame, releases OH-radicals suitable of enhancing the features of uniform heating of the mirror surface, and as well of advantageously activating the sites wherein the glue can "grip" to another surface, so that the subsequent step of deposition of the glue - as it will be better described hereinafter - is more efficient and concurs with increasing the overall resistance of the safety mirror. The applicant underlines that said process of activation of the sites wherein the glue can grip, directly derives from a combination of heating and chemical combination of the flame with the glue itself.

On each plate of glass material 110, by means of a couple of heated deposition rollers 250, a layer of fluid glue is deposed by means of supplying nozzles 260 (block 1005). The presence of heated deposition rollers 250 allows for using a glue that at ambient temperature is significantly more viscous (or either semi-solid), while instead the absence of heated deposition rollers would necessarily cause the use of a glue being too fluid for a correct application. Said proceeding is therefore the preferable one, since it has the best distribution and adhesion of the fluid glue on both the plates of glass material 110. Anyway, the applicant observed that the layer of fluid glue could also be deposited on a single plate of glass material 110, in a double amount [g/m²], even if not obtaining the same equal superficial adhesion on both the plates, since the glue that would be deposited on the second plate of glass material at a time forcedly subsequent respective to that wherein it is distributed on the first plate of glass material 110, with the risk of partial polymerization of the glue, partially soluble with a slight increase of the temperature of deposition and with a speed-up of the coupling process of the plates described in the present invention. The applicant has observed that the glue that better guarantees the adhesion and, when solidified, realizes a layer of plastic buffer material 130 capable of conferring the best features of robustness to the safety mirror, is a glue, that in a preferred and non-limiting production embodiment is a glue characterized by a viscosity comprised in the interval [1000-2000] Pa^{∗}s and more preferably1250 Pa^{∗}s (at 140 °C).The applicant has observed that for the aforementioned features, the glue which is preferable is therefore a hot-melt glue (so called *hot melt),* of a thermoplastic elastomeric (TPE) type, and more precisely a glue selected between the glues listed in the herewith following list:
- ethylene vinyl acetate (EVA);
- polyethylene (PE);
- styrene-butadiene co-polymer (SBS);
- thermoplastic polyurethane (TPU);
- amorphous poly-olefin (APAO);
- co-polyamide (CoPA);
- co-polyester (CoPES);
- reactive *hot melt* (RHM);

In association to the glue with the aforementioned features, the applicant has observed that the best final robustness of the mirror is obtained in case the plates of glass material 110 before the deposition of the glue, are at a temperature around 100°C and anyway not beyond the interval [50-150]°C. The applicant has furthermore illustrated that keeping the temperature in the optimal neighborhood of 100°C - temperature that represents the optimal compromise between the correct heating and optimization of the subsequent glue distribution with its fusion - allows for reducing the overall heating of the material respective to the known art, obtaining an economically more convenient process.

In detail, so that the glue presents the correct features of adhesion and keeping of plasticity in time, it must be treated according to the following process.

In detail, the polyester based glue, is collected from waterproof or hermetic containers 290, possibly but non forcedly in vacuum condition, having a plurality of pellets 300, that are transferred and kept in a controlled atmosphere within the tank 270 being for example heated through an electric serpentine 280.

In detail, said controlled atmosphere is obtained by de-humidifier filters arranged in a closed environment that surrounds the tank 270 and the pellets containers 290. The applicant has in fact observed that the presence of an excess of humidity in the atmosphere, also starting from pellets 300, starts a chemical reaction and activates a partial polymerization of the glue too early, and this causes a reduction of the adhesive and plasticity features of the layer of glue that influence negatively the final production of the safety mirror in terms of resistance to the impact and in the shear test.

In detail, the tank is heated in such a way to keep the temperature of the glue therein contained in the interval comprised between 100°C and 200°C; the glue is therefore collected and sent towards the supplying nozzles for then being deposited on the plates of glass material 110, and in detail on the painted sides with painted layer 120.

The applicant has observed that the amount of glue distributed on said faces shall be carefully set, since an excess of glue - as well as an insufficient amount - determinates a reduction of the features of robustness of the mirror. An excess of glue is furthermore a source of waste.

Therefore the applicant has observed that the peak of final robustness of the safety mirror 100 object of the present invention is obtained in case on the painted sides of each of the two plates of glass material 110 are deposited between 100g/m² and 200g/m² of fluid glue. Therefore a peculiar feature of the process herewith described is to have a layer of gluing material for each one layer of glass material 110, that are then superposed so that from two layers of gluing material, results a single one. The applicant underlines that said amount of glue deposited shall be intended as being purely exemplary and non-limiting, since it represents the optimal amount of glue to be deposited for surface unit, but referred to the specific type of glue treated. In case the process is realized in a sub-optimal way (not claimed) with the deposition on a single plate of glass material, the amount of glue to be deposited results to be the double. Therefore, where it is present on the painted side only one deposited layer, the density is comprised in the interval between 200g/m² and 400g/m². Therefore, into the second station 220, the speed of sliding of the deposition rollers 250 and the amount of fluid glue fed by the supplying nozzles 260 is such as it is anyway deposited an overall layer of glue in a measure comprised between 100g/m² and 200g/m² of fluid glue. Said amount of deposited glue per unit area of surface shall not be intended as limiting, since many types of glue can be used as already described. The presence of deposition rollers, anyway allows for having a layer of glue on each of the two plates of glass, realized in such a way to not to have bubbles therein enclosed - bubbles that could reduce the overall adhesion of the layer and therefore the robustness of the safety mirror 100, and as well have the exposed side of said layer as uniform as possible.

In a preferred production embodiment, the two plates of glass material 110 are simultaneously treated both in terms of flaming and in terms of deposition of layer of fluid glue. The applicant has observed that this represents the most optimal solution for reaching the uniformity of behavior of each of the two sub-ensembles of glass material 110 plates - layer of glue.

Subsequently, the two sub-ensemble plates of glass material 110 - layer of glue, are coupled together so as to form the sandwich described at the beginning of the present description (block 1006).

Preferably, said coupling takes place by means of a step of superposition and pressing of the two sub-ensembles that is performed in a third station of the machine for producing the safety mirror.

In detail, the two sub-ensemble plates of glass material 110 - layer of glue are superimposed in such a way to result planarly parallel and oriented in such a way that the two layers of glue are faced one towards the other, so that they can bond to each other and uniformly mix to the end of realizing the layer of plastic buffer material 130.

In a preferred and non-limiting production embodiment of the present invention, between the deposition of the fluid glue on the painted layer 120 and the coupling of the two sub-ensembles to the end of pressing, no more than 60s can lapse. Also in case types of glue different than the one previously described are used, the coupling after 60 seconds - and more preferably within 30 seconds - risks to see the two layers of glue yet too much polymerized in surface, and the final adhesion of each other - since these two layers join specifically due to the superposition of the plates - risks of be less robust and this could cause that, in case of impact of the mirror with an object, different fragments of plates of glass material are dispersed in the environment no more being reciprocally joint one another.

True as well is that between the deposition of the fluid glue on the painted layer 120 and the coupling of the two sub-ensembles to the end of pressing, not less than 5s should lapse, this for guaranteeing that the chemical reaction of the fluid glue with the air can correctly start.

In detail, said pressing (block 1007) takes place by means of a couple of pressing means 320, that act on the side of each of the plates of glass material 110 that is opposed respective to the side has the painted layer 120, acting with a force F perpendicular to the plane defined by the plates of glass material.

Finally, at least one of the two plates of glass material can comprise metal inclusions suitable for providing transparency and/or color of the same different than the total transparency and neutrality of color typical of the white mirrors. On the safety mirror 100 object of the present invention some tests have been made. In detail, between the various tests performed on the mirror object of the present invention, it has been performed a test of breaking by letting a ball of metal of 1 kilogram fall on a sample of the safety mirror 100 from an height of 2,5m. The ball has been left fall freely, without initial acceleration on a sample formed by two plates of glass material each being 3mm thick.

Following the impact, the safety mirror 100 object of the present invention has been fractured, in detail, on the plate of glass opposed respective to that onto which the ball impacted. Even though fractured, the plate opposed respective to that onto which the ball has impacted did not disperse fragments of glass, that rested stuck with the other and/or anyway still at least partially glued to the intermediate plastic buffer layer. From the previous test it is therefore possible to attribute an impact resistance significantly higher respective to that which could be obtained by a traditional process in detail using very liquid glues deposited with cold rollers.

This means that the safety mirror 100 object of the present invention, realized through the method up to here described, has a peculiar property not only of impeding the dispersion of fragments, but also of fracturing on the opposite side respective to that which has been hit. This vantage allows a significantly higher safety, in particular in those applications in bathroom or similar. In said applications, and in case of a shock of an entity such as to cause the fracture, the safety mirror 100 object of the present invention cracks anyway facing either to the wall or inwards respective to the bathroom cabinet. Therefore, neither the lines of fracture can risk to directly wound the user that clumsily impacts thereto, since the fractures and cracks lay on the opposite side, not directly accessible to the user itself. Also in case the fracture of the opposite plate releases fragments of glass, it is clear that said fragments would rest anyway dispersed on the opposite side respective to the side onto which the user impacts, further reducing the risk of wounding also respective to the conventional type safety mirrors.

Furthermore, on the safety mirror 100 object of the present invention has been also performed a bar reciprocal sliding test. On a reciprocal area of gluing of two plates of glass material equivalent to 24 x 12.5 mm, the force obtained for causing a division thereof is equal or higher than 0.4 MPa. Advantageously, therefore, the mirror object of the present invention, realized by means of the previously described process, is very robust not only in terms of impact but also is optimized in reducing the risk of separation of the two plates of glass material two to a reciprocal sliding.

## Claims

1. Safety mirror (100) comprising a sandwich (110, 120, 130) in turn comprising a couple of plates of glass material (110) planarly parallel and separated from each other by a layer of plastic buffer material (130) realizing a breakage-preventing layer of said safety mirror (100); each plate of glass material (110) of the said couple of plates of glass material has a painted side (120) that faces towards said layer of plastic buffer material (130); said safety mirror (100) is **characterized in that** two layers of gluing material are in advance superposed to a respective painted side (120) defining two sub-ensemble plates of glass material (110) each with a layer of gluing material, wherein said two layers of gluing material have per each layer a density comprised in the interval between 100g/m² and 200g/m², and wherein said layer of plastic buffer material (130) is a layer of mixing by compression of said two layers of gluing material by superposing said two sub-ensemble plates in such a way to result planarly parallel and oriented so that said two layers of gluing material are faced one towards the other, so that they can bond to each other and uniformly mix to the end of realizing said layer of plastic buffer material (130).

2. Safety mirror (100) according to claim 1, wherein said layer of plastic buffer material (130) comprises at least one layer of hot-melt glue (so called *hot melt),* of a thermoplastic elastomeric (TPE) type, and wherein said hot-melt glue (so called *hot melt*), of a thermoplastic elastomeric (TPE) type has at a temperature of 140°C a viscosity comprised in the interval 1000-2000 Pa^{∗}s.

3. Safety mirror (100) according to any of the preceding claims, wherein it has a lap-shear resistance, on an area of gluing equal to 24 mm x 12.5 mm, higher than (0.4 MPa.

4. Safety mirror (100) according to any of the preceding claims, wherein between said painted layer (120) and said plate of glass material (110) is interposed a layer of reflecting material realized in silver or in aluminum.

5. Method of production of a safety mirror (100), said method comprising:
- a preventive step of production of a couple of plates (110) of glass material, wherein each plate of the said couple of plates of glass material (110) has a painted side (120);
- a second step of application of a layer of gluing material to a respective painted side (120) defining two sub-ensemble plate of glass material (110) with a layer of gluing material;
- a further step of superposition of said two sub-ensemle plates with said two layers of gluing material of said painted sides (120) faced one towards the other, realizing a sandwich (110, 120, 130) formed by a couple of plates of glass material (110) planarly parallel and separated by a layer of plastic buffer material (130) deriving from the union of said layer of gluing material positioned beforehand on said painted side; and
- a step of pressing of said sandwich (110, 120, 130) in a direction orthogonal to the direction defined by said planes of the plates of glass material (110);
said method comprising furthermore a step of pre-heating of each of the plates of glass material (110) being part of the said couple of plates.

6. Method according to claim 5, wherein it comprises a step of heating of a painted side (120) of each of the said plates by means of a naked flame (240), wherein said naked flame is a blue flame containing OH radicals deriving from the combustion of gases at least partially comprising methane or propane.

7. Method according to any of the claims 5 or 6, wherein said plastic buffer material is realized starting from a fluid glue, and wherein said method comprises a step of deposition by means of deposition rollers (250) of said fluid glue on said painted side (120) of each of the plates of the said couple of plates of glass material (110), before said step of superposition of the said painted sides (120).

8. Method according to any of the preceding claims 5-7, wherein said plastic buffer material (130) derives from a fluid glue and said method comprises a step of extraction from waterproof containers (290) of a plurality of pellets (300) of said glue, starting from a waterproof container, and a step of deposition of a fused portion of said pellets (300) of said glue on said painted side (120) by means of a step of de-humidification of the air with which said glue comes into contact before the deposition on the side of each of the said plates of glass material (110).

9. Method according to any of the preceding claims 5-8, wherein said step of pre-heating comprises bringing said plates of glass material (110) to a temperature comprised in the interval between [50-150] °C, preferably 100°C.

10. Method according to claim 7, wherein said step of deposition by means of deposition rollers (250) of said fluid glue comprises a step of preventive heating of the said glue to a temperature comprised between [150-160]°C and a step of heating of said deposition roller up to 150°C.

11. Method according to claim 10, **characterized in that** it comprises a step of deposition of said fluid glue in an amount comprised between 100g/m² and 200g/m² on each of the said painted sides (120).

12. Method according to claim 5, wherein said step of superposition of the said painted sides (120) with said layer of gluing material thereon takes place after an interval of time between 5s and 60s after said step of deposition of the said fluid glue.

13. Method according to any of the preceding claims 5-11, wherein said glue is a hot-melt glue (so called *hot melt),* of a thermoplastic elastomeric (TPE) type.

14. Method according to claim 12, **characterized in that** said glue comprises at least one among:
- ethylene vinyl acetate (EVA);
- polyethylene (PE);
- styrene-butadiene co-polymer (SBS);
- thermoplastic polyurethane (TPU);
- amorphous poly-alpha olefins (APAO);
- co-polyamide (CoPA);
- co-polyester (CoPES);
- reactive *hot melt* (RHM).

## Patentansprüche

1. Sicherheitsspiegel (100), der einen Verbund (110, 120, 130) umfasst, der wiederum einige Platten aus Glasmaterial (110) umfasst, die planarparallel und durch eine Schicht von Kunststoffpuffermaterial (130) voneinander getrennt sind, wodurch eine bruchfeste Schicht des Sicherheitsspiegels (100) realisiert wird; wobei jede Platte aus Glasmaterial (110) der einigen Platten aus Glasmaterial eine lackierte Seite (120) aufweist, die der Schicht aus Kunststoffpuffermaterial (130) zugewandt ist;
der Sicherheitsspiegel (100) ist **dadurch gekennzeichnet, dass** zwei Schichten von Klebematerial vorab auf eine jeweilige lackierte Seite (120) überlagert werden, wodurch zwei Plattenuntergruppen aus Glasmaterial (110) jeweils mit einer Schicht Klebematerial definiert werden, wobei die zwei Schichten Klebematerial pro Schicht eine Dichte aufweisen, die in dem Intervall zwischen 100 g/m2 und 200 g/m2 umfasst ist, und
wobei die Schicht Kunststoffpuffermaterial (130) eine Schicht des Mischens mittels Zusammendrücken der zwei Schichten Klebematerial durch Überlagern der zwei Plattenuntergruppen derart, dass sie planarparallel und ausgerichtet sind, ist, sodass die zwei Schichten Klebematerial einander zugewandt sind, sodass sie miteinander verbunden und gleichmäßig gemischt werden können, wodurch die Schicht Kunststoffpuffermaterial (130) realisiert wird.

2. Sicherheitsspiegel (100) nach Anspruch 1, wobei die Schicht Kunststoffpuffermaterial (130) mindestens eine Schicht Hotmeltklebstoff (so genanntes *Hotmelt*) des Typs eines thermoplastischen Elastomers (TPE) umfasst und wobei der Hotmeltklebstoff (so genanntes *Hotmelt*) des Typs eines thermoplastischen Elastomers (TPE) bei einer Temperatur von 140 °C eine Viskosität aufweist, die im Intervall 1000-2000 Pa^{∗}s umfasst ist.

3. Sicherheitsspiegel (100) nach einem der vorhergehenden Ansprüche, wobei er auf einer Fläche der Verklebung von 24 mm x 12,5 mm eine Zugscherfestigkeit von mehr als 0,4 Mpa aufweist.

4. Sicherheitsspiegel (100) nach einem der vorhergehenden Ansprüche, wobei zwischen der lackierten Schicht (120) und der Platte aus Glasmaterial (110) eine Schicht aus reflektierendem Material, die aus Silber oder aus Aluminium realisiert ist, eingefügt ist.

5. Verfahren zur Herstellung eines Sicherheitsspiegels (100), wobei das Verfahren Folgendes umfasst:
- einen präventiven Schritt der Herstellung einiger Platten (110) aus Glasmaterial, wobei jede Platte der einigen Platten aus Glasmaterial (110) eine lackierte Seite (120) aufweist;
- einen zweiten Schritt des Auftragens einer Schicht Klebematerial auf eine jeweilige lackierte Seite (120), wodurch zwei Plattenuntergruppen aus Glasmaterial (110) mit einer Schicht Klebematerial definiert werden;
- einen weiteren Schritt des Überlagerns der zwei Plattenuntergruppen mit den zwei Schichten Klebematerial der lackierten Seiten (120), die einander zugewandt sind, wodurch ein Verbund (110, 120, 130) realisiert wird, der durch einige Platten aus Glasmaterial (110), die planarparallel und durch eine Schicht Kunststoffpuffermaterial (130) getrennt sind, das aus der Verbindung der Schicht Klebematerial abgeleitet ist, das zuvor auf der lackierten Seite positioniert wurde, gebildet wird; und
- einen Schritt des Drückens des Verbunds (110, 120, 130) in eine Richtung orthogonal zu der Richtung, die durch die Ebenen der Platten aus Glasmaterial (110) definiert ist;
wobei das Verfahren ferner einen Schritt des Vorerwärmens jeder der Platten aus Glasmaterial (110), der Teil der einigen Platten sind, umfasst.

6. Verfahren nach Anspruch 5, wobei es einen Schritt des Erwärmens einer lackierten Seite (120) jeder der Platten mittels einer offenen Flamme (240) umfasst, wobei die offene Flamme eine blaue Flamme ist, die OH-Radikale enthält, die aus der Verbrennung von Gasen, die mindestens teilweise Methan oder Propan umfassen, abgeleitet werden.

7. Verfahren nach einem der Ansprüche 5 oder 6, wobei das Kunststoffpuffermaterial bei einem flüssigen Klebstoff beginnend realisiert wird und wobei das Verfahren vor dem Schritt der Überlagerung der lackierten Seiten (120) einen Schritt der Ablagerung des flüssigen Klebstoffs auf der lackierten Seite (120) jeder der Platten der einigen Platten aus Glasmaterial (110) mittels Ablagerungswalzen (250) umfasst.

8. Verfahren nach einem der vorhergehenden Ansprüche 5-7, wobei das Kunststoffpuffermaterial (130) aus einem flüssigen Klebstoff abgeleitet wird und das Verfahren einen Schritt des Entnehmens einer Vielzahl von Pellets (300) des Klebstoffs aus einem wasserdichten Behälter (290), beginnend bei einem wasserdichten Behälter, und einen Schritt des Ablagerns eines fusionierten Abschnitts der Pellets (300) des Klebstoffs auf der lackierten Seite (120) mittels eines Schritts der Entfeuchtung der Luft, mit der der Klebstoff vor der Ablagerung auf der Seite jeder der Platten aus Glasmaterial (110) in Kontakt kommt, umfasst.

9. Verfahren nach einem der vorhergehenden Ansprüche 5-8, wobei der Schritt des Vorerwärmens umfasst, dass die Platten aus Glasmaterial (110) auf eine Temperatur gebracht werden, die im Intervall zwischen [50-150] °C umfasst ist, vorzugsweise 100 °C.

10. Verfahren nach Anspruch 7, wobei der Schritt der Ablagerung des flüssigen Klebstoffs mittels Ablagerungswalzen (250) einen Schritt des präventiven Erwärmens des Klebstoffs auf eine Temperatur, die zwischen [150-160] °C umfasst ist, und einen Schritt des Erwärmens der Ablagerungswalze auf bis zu 150 °C umfasst.

11. Verfahren nach Anspruch 10, **dadurch gekennzeichnet, dass** es einen Schritt der Ablagerung des flüssigen Klebstoffs in einer Menge, die zwischen 100 g/m2 und 200 g/m2 umfasst ist, auf jede der lackierten Seiten (120) umfasst.

12. Verfahren nach Anspruch 5, wobei der Schritt der Überlagerung der lackierten Seiten (120) mit der Schicht Klebematerial darauf nach einem Zeitintervall zwischen 5 s und 60 s nach dem Schritt der Ablagerung des flüssigen Klebstoffs erfolgt.

13. Verfahren nach einem der vorhergehenden Ansprüche 5-11, wobei der Klebstoff ein Hotmeltklebstoff (so genanntes *Hotmelt*) des Typs eines thermoplastischen Elastomers (TPE) ist.

14. Verfahren nach Anspruch 12, **dadurch gekennzeichnet, dass** der Klebstoff mindestens eines von Folgendem umfasst:
- Ethylenvinylacetat (EVA);
- Polyethylen (PE);
- Styrol-Butadien-Copolymer (SBS);
- thermoplastisches Polyurethan (TPU);
- amorphe Polyalphaolefine (APAO);
- Copolyamid (CoPA);
- Copolyester (CoPES);
- reaktives *Hotmelt* (RHM).

## Revendications

1. Miroir de sécurité (100) comprenant un sandwich (110, 120, 130) comprenant à son tour une paire de plaques de matériau de verre (110) parallèles dans un plan et séparées l'une de l'autre par une couche de matériau tampon en plastique (130) réalisant une couche empêchant la rupture dudit miroir de sécurité (100) ; chaque plaque de matériau de verre (110) de ladite paire de plaques de matériau de verre a un côté peint (120) qui fait face à ladite couche de matériau tampon en plastique (130) ;
ledit miroir de sécurité (100) est **caractérisé en ce que** deux couches de matériau de collage sont superposées à l'avance à un côté peint respectif (120) définissant deux plaques de sous-ensemble de matériau de verre (110) chacune avec une couche de matériau de collage, où lesdites deux couches de matériau de collage ont pour chaque couche une densité comprise dans l'intervalle entre 100g/m² et 200g/m², et
où ladite couche de matériau tampon en plastique (130) est une couche de mélange par compression desdites deux couches de matériau de collage en superposant lesdites deux plaques de sous-ensemble de manière à obtenir un plan parallèle et orienté de telle sorte que lesdites deux couches de matériau de collage soient tournées l'une vers l'autre, de telle sorte qu'elles puissent se lier l'une à l'autre et se mélanger uniformément jusqu'à l'extrémité de réalisation de ladite couche de matériau tampon en plastique (130).

2. Miroir de sécurité (100) selon la revendication 1, où ladite couche de matériau tampon en plastique (130) comprend au moins une couche de colle thermofusible (dite *thermofusible*), d'un type élastomère thermoplastique (TPE), et où ladite colle thermofusible (dite *thermofusible*), d'un type élastomère thermoplastique (TPE) a, à une température de 140°C, une viscosité comprise dans l'intervalle de 1000 à 2000 Pa^{∗}s.

3. Miroir de sécurité (100) selon l'une quelconque des revendications précédentes, où il présente une résistance au cisaillement par recouvrement, sur une surface de collage égale à 24 mm x 12,5 mm, supérieure à 0,4 MPa.

4. Miroir de sécurité (100) selon l'une quelconque des revendications précédentes, où entre ladite couche peinte (120) et ladite plaque de matériau de verre (110) est interposée une couche de matériau réfléchissant réalisée en argent ou en aluminium.

5. Procédé de fabrication d'un miroir de sécurité (100), ledit procédé comprenant :
- une étape préventive de fabrication d'une paire de plaques (110) de matériau de verre, où chaque plaque de ladite paire de plaques de matériau de verre (110) a un côté peint (120) ;
- une seconde étape d'application d'une couche de matériau de collage sur un côté peint respectif (120) définissant deux plaques de sous-ensemble de matériau de verre (110) avec une couche de matériau de collage ;
- une étape supplémentaire de superposition desdites deux plaques de sous-ensemble avec lesdites deux couches de matériau de collage desdits côtés peints (120) tournées l'une vers l'autre, réalisant un sandwich (110, 120, 130) formé par une paire de plaques de matériau de verre (110) parallèles dans un plan et séparées par une couche de matériau tampon en plastique (130) dérivant de l'union de ladite couche de matériau de collage positionnée au préalable sur ledit côté peint ; et
- une étape de pressage dudit sandwich (110, 120, 130) dans une direction orthogonale à la direction définie par lesdits plans des plaques de matériau de verre (110) ;
ledit procédé comprenant en outre une étape de préchauffage de chacune des plaques de matériau de verre (110) faisant partie de ladite paire de plaques.

6. Procédé selon la revendication 5, où il comprend une étape de chauffage d'un côté peint (120) de chacune desdites plaques au moyen d'une flamme nue (240), où ladite flamme nue est une flamme bleue contenant des radicaux OH dérivant de la combustion de gaz comprenant au moins partiellement du méthane ou du propane.

7. Procédé selon l'une quelconque des revendications 5 ou 6, où ledit matériau tampon en plastique est réalisé à partir d'une colle fluide, et où ledit procédé comprend une étape de dépôt au moyen de rouleaux de dépôt (250) de ladite colle fluide sur ledit côté peint (120) de chacune des plaques de ladite paire de plaques de matériau de verre (110), avant ladite étape de superposition desdits côtés peints (120).

8. Procédé selon l'une quelconque des revendications précédentes 5 à 7, où ledit matériau tampon en plastique (130) dérive d'une colle fluide et ledit procédé comprend une étape d'extraction à partir de récipients étanches à l'eau (290) d'une pluralité de pastilles (300) de ladite colle, à partir d'un récipient étanche à l'eau, et une étape de dépôt d'une partie fondue desdites pastilles (300) de ladite colle sur ledit côté peint (120) au moyen d'une étape de déshumidification de l'air avec lequel ladite colle vient en contact avant le dépôt sur le côté de chacune desdites plaques de matériau de verre (110).

9. Procédé selon l'une quelconque des revendications précédentes 5 à 8, où ladite étape de préchauffage comprend l'apport desdites plaques de matériau de verre (110) à une température comprise dans l'intervalle entre [50 et 150]°C, de préférence 100°C.

10. Procédé selon la revendication 7, où ladite étape de dépôt au moyen de rouleaux de dépôt (250) de ladite colle fluide comprend une étape de chauffage préventif de ladite colle à une température comprise entre [150-160]°C et une étape de chauffage dudit rouleau de dépôt jusqu'à 150°C.

11. Procédé selon la revendication 10, **caractérisé en ce qu'**il comprend une étape de dépôt de ladite colle fluide en une quantité comprise entre 100g/m² et 200g/m² sur chacun desdits côtés peints (120).

12. Procédé selon la revendication 5, où ladite étape de superposition desdits côtés peints (120) avec ladite couche de matériau de collage sur ceux-ci a lieu après un intervalle de temps compris entre 5s et 60s après ladite étape de dépôt de ladite colle fluide.

13. Procédé selon l'une quelconque des revendications précédentes 5 à 11, où ladite colle est une colle thermofusible (dite *thermofusible*), d'un type élastomère thermoplastique (TPE).

14. Procédé selon la revendication 12, **caractérisé en ce que** ladite colle comprend au moins l'un parmi :
- éthylène-acétate de vinyle (EVA) ;
- polyéthylène (PE) ;
- copolymère styrène-butadiène (SBS) ;
- polyuréthane thermoplastique (TPU) ;
- poly-alpha-oléfines amorphes (APAO) ;
- co-polyamide (CoPA) ;
- copolyester (CoPES) ;
- *thermofusible* réactif (RHM).
